**Europäisches Patentamt**

**European Patent Office**

**Office européen des brevets**

(19)

(11) Veröffentlichungsnummer: **0 351 879**

**A1**

(12) ## EUROPÄISCHE PATENTANMELDUNG

(21) Anmeldenummer: 89113470.2

(22) Anmeldetag: 21.07.89

(51) Int. Cl.⁴: **B01D 61/36 , B01D 63/10 , B01D 3/00 , C02F 1/04**

(30) Priorität: 21.07.88 DE 3824839

(43) Veröffentlichungstag der Anmeldung:
24.01.90 Patentblatt 90/04

(84) Benannte Vertragsstaaten:
**AT BE CH DE ES FR GB GR IT LI LU NL SE**

(71) Anmelder: **Wiedner, Günter, Dr.**
**Gartenseeweg 12**
**D-8124 Seeshaupt(DE)**

(72) Erfinder: **Wiedner, Günter, Dr.**
**Gartenseeweg 12**
**D-8124 Seeshaupt(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**D-8000 München 22(DE)**

(54) **Salzwasserdestillationsvorrichtung.**

(57) Eine Salzwasserdestillationsvorrichtung weist einen an den beiden Stirnflächen abgedichteten Spiralwickel auf, der in radialer Richtung sich wiederholend folgende Schichten aufweist: zwei auf den beiden Flächen eines Heißkonzentrat-Abstandshaltegitters (11) angeordnete mikroporöse Membranen (12), auf deren von dem Heißkonzentrat-Abstandshaltegitter (11) abgewandten Seiten Kondensationsfolien (13) angeordnet sind, an die sich Kühlflüssigkeits-Abstandshaltegitter (14) und jeweils eine weitere Kondensationsfolie (13) anschliessen. Auf beiden Seiten folgt wieder eine mikroporöse Membran (12). Zwischen den durch den Kühlflüssigkeits-Abstandshalter (14) auf Abstand gehaltenen Kondensationsfolien (13) wird das kalte Konzentrat (K) von außen nach innen geleitet. Von dort gelangt es in eine Heizvorrichtung und von dieser zwischen den benachbarten Heißkonzentrat-Abstandshaltegittern (11) im Gegenstrom wieder nach außen. Das Destillat (D) wird radial außen abgezogen. Die Abstandshaltegitter (11, 14) bestehen aus unter einem Winkel zur Strömungsrichtung (R) angeordneten, gekreuzten Stegen (15, 16).

Fig. 1

## Salzwasserdestillationsvorrichtung

Die Erfindung betrifft eine Salzwasserdestillationsvorrichtung nach dem Oberbegriff des Patentanspruchs 1, die insbesondere zur Erzeugung von Süßwasser aus Meerwasser verwendet wird. Hierbei wird von der Membrandestillation Gebrauch gemacht, die aus der Zeitschrift Chem.-Ing.-Tech. 56 (1984) Nr. 7, Seiten 514 bis 521, bekannt ist. Aus dieser Schrift und der US-PS 33 40 186 ist es auch schon bekannt, die einzelnen in der Vorrichtung enthaltenen Schichten spiralförmig aufzuwickeln, um so eine kompakte bauliche Anordnung mit einer großen Destillationsfläche zu erzielen.

Der Wirkungsgrad der bekannten Salzwasserdestillationsvorrichtungen ist jedoch dadurch begrenzt, daß die Verwirbelung innerhalb des Heißkonzentratstromes sowie innerhalb des Kühlflüssigkeitsstromes zu gering ist. Eine Erhöhung der Verwirbelung darf jedoch nicht zur Folge haben, daß ein zu hoher Druckverlust zwischen Strömungsein- und -ausgang entsteht, weil dies wieder den Energieverbrauch der Vorrichtung zu stark anwachsen lassen würde.

Das Ziel der Erfindung besteht somit darin, eine Salzwasserdestillationsvorrichtung der eingangs genannten Gattung zu schaffen, deren Wirkungsgrad durch eine erhöhte Verwirbelung in den Heißwasser- und Kühlkanälen erhöht ist, wobei jedoch der in den einzelnen Kanälen entstehende Druckverlust gering bleibt.

Zur Lösung dieser Aufgabe sind die Merkmale des Anspruchs 1 vorgesehen. Besonders zweckmäßige Weiterbildungen der Erfindung sind durch die Ansprüche 2 bis 5 gekennzeichnet.

Durch die Verwendung von diagonal zur Strömungsrichtung verlaufenden Gitterstegen, die zudem noch in verschiedenen Ebenen bzw. verschiedenen konzentrischen Flächen angeordnet sind, wird ein solcher Strömungsweg der in den betreffenden Kanälen strömenden Flüssigkeiten erzielt, daß innerhalb der Kanäle durch Verwirbelung ein weitgehend vollständiger Wärmeaustausch zwischen den einzelnen Schichten erfolgt, wodurch eine optimale Wärmeabgabe an die die Kanäle radial außen und innen begrenzenden Flächen gewährleistet wird. Es findet somit an diesen Flächen eine optimale Kühlung bzw. optimale Erhitzung der dort befindlichen Flüssigkeitsbestandteile statt.

Aufgrund der speziellen gekreuzten Anordnung der Gitterstege wird aber gleichzeitig der Strömungswiderstand nur so geringfügig heraufgesetzt, daß der Druckverlust der spiralförmig angeordneten Flüssigkeitsdurchgangskanäle sehr gering bleibt. Es wird somit ein wesentlich höherer Destillationswirkungsgrad erzielt, d.h., daß beispielsweise 4 l/h/qm destilliertes Wasser erzeugt werden können, wenn das Heißkonzentrat beispielsweise durch Solarenergie auf eine Temperatur in der Nähe des Siedepunktes erhitzt wird.

Die Erfindung wird durch die Merkmale der Ansprüche 6 bis 9 wesentlich weitergebildet. Dadurch, daß ein spezielles Destillat-Abstandshaltegitter im Destillationsraum bzw. -kanal vorgesehen wird, kann das Destillat weitgehend widerstandsfrei und ungehindert sowie ohne Bildung von Taschen in Richtung des Weges des Heißkonzentrats abgeführt werden.

Die Ausführungsform nach Anspruch 10 ist zweckmäßig, um die unbewehrte Schicht der Membran gegenüber dem Destillat-Ab standshaltegitter zu schützen, welches entsprechend allein nach den Erfordernissen einer einwandfreien Abstandshaltung und Abführung des Destillats im Destillatkanal ausgelegt sein kann.

Während bei bekannten Destillationswickeln im allgemeinen eine kaschierte Aluminiumfolie als Kondensationsfolie verwendet wird, ist diese Folie erfindungsgemäß nach einem der Ansprüche 11 oder 12 ausgebildet. Die Ausführungsform nach Anspruch 12 hat dabei den Vorteil, daß, weil die Metallfolie nicht von irgendwelchen Kunststoffschichten bedeckt ist, eine besonders gute Wärmeleitung von einer zur anderen Seite und damit eine besonders wirkungsvolle Kondensation gewährleistet ist. Durch Verwendung der erfindungsgemäßen Metallfolie kann der Wirkungsgrad der Destillation nochmals deutlich gesteigert werden.

Die Erfindung wird im folgenden beispielsweise anhand der Zeichnung beschrieben; in dieser zeigt:

Fig. 1 einen schematischen Querschnitt durch einen Teil des Spiralwickels einer erfindungsgemäßen Salzwasserdestillationsvorrichtung,

Fig. 2 eine Draufsicht eines Heißkonzentrat- bzw. Kühlflüssigkeits-Abstandshaltegitters für eine Salzwasserdestillationsvorrichtung gemäß der Erfindung,

Fig. 3 einen Schnitt nach Linie III-III in Fig. 2,

Fig. 4 eine schematische Draufsicht eines erfindungsgemäßen Destillat-Abstandshaltegitters, und

Fig. 5 einen schematischen Schnitt nach Linie V-V in Fig.4.

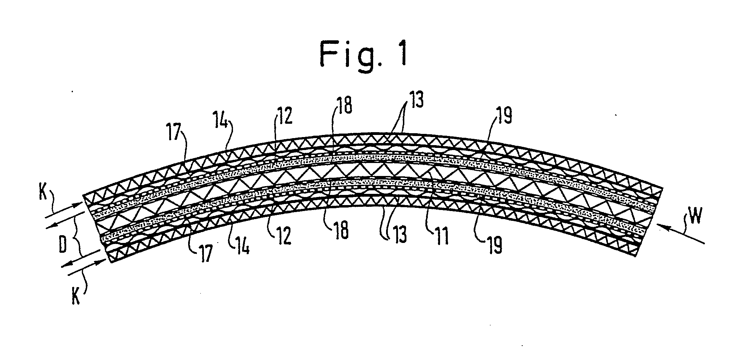

Fig. 1 zeigt nur einen Ausschnitt eines Spiralwikels für eine erfindungsgemäße Salzwasserdestillationsvorrichtung. Die verschiedenen in Fig. 1 wiedergegebenen Lagen wiederholen sich radial nach außen und nach innen bis zu einer äußersten bzw. innersten Lage, der radial von außen das nicht erhitzte kühle Meerwasser K bzw. radial innen das erhitzte Meerwasser W im Gegenstrom zugeführt bzw. radial außen das gebildete Destillat D entnommen wird.

Kernbestandteil des Spiralwickels sind zwei auf den beiden Flächen eines Heißkonzentrat-Abstandshaltegitters 11 angeordnete mikroporöse Membranen 12, welche die Eigenschaft haben, daß sie zwar Dampf, nicht jedoch Wasser oder Salzmoleküle hindurchlassen. Auf der dem Heißkonzentrat-Abstandshaltegitter 11 zugewandten Fläche sind die mikroporösen Membranen 12 mit einer wasserdurchlässigen Schutzschicht 18 bedeckt, die beispielsweise als eine Kunststoff-Lochfolie ausgebildet sein kann und eine Stützlage für die eigentliche Membran 12 darstellt. Radial außen bzw. innen von der Membran 12 ist zunächst ein gepunktet angedeutetes Schutzschichtgitter 19 angeordnet, welches die Form eines feinen Gewebes oder einer sehr dünnen Lochfolie haben kann.

Radial nach außen bzw. innen schließt an die wasserdurchlässige Schutzschicht 19 ein Destillat-Abstandshaltegitter 17 an, dem außen bzw. innen eine wasser- und dampfundurchlässige Kondensationsfolie 13 folgt, an der radial von außen bzw. radial von innen ein Kühlflüssigkeits-Abstandshaltegitter 14 anschließt, das außen bzw. innen wieder durch eine wasser- und dampfundurchlässige Kondensationsfolie 13 bedeckt ist.

An beiden, in Fig. 1 nicht dargestellten Stirnseiten ist der Spiralwickel durch angegossene Kunstharzplatten dicht verschlossen, so daß die von einer äußeren oder inneren Umfangs seite her eingeführte Flüssigkeit gezwungen wird, auf Spiralbahnen von außen nach innen bzw. von innen nach außen zu strömen.

Nach Fig. 1 strömt in den die Kühlflüssigkeits-Abstandshaltegitter 14 zwischen zwei Kondensationsfolien 13 enthaltenden Raum im Uhrzeigersinn nicht erhitztes und vorzugsweise kühles Meerwasser K, welches im nicht dargestellten Zentrum des Spiralwickels axial abgeführt und einer vorzugsweise durch Solarenergie beheizten Heizvorrichtung zugeführt wird. Anschließend wird das erhitzte Meerwasser wieder zentral in den Wickel zurückgeführt und im Gegenstrom zum kühlen Meerwasser K als Heißmeerwasserstrom W in den durch das Heißkonzentrat-Abstandshaltegitter 11 gebildeten Raum eingeführt, wo es entgegen dem Uhrzeigersinn im Spiralwickel radial von innen nach außen strömt. In der äußersten Lage des Heißkonzentrat-Abstandshaltegitters 11 wird das bis dahin weitgehend abgekühlte erhitzte Meerwasser W wieder aus dem Spiralwickel entnommen und entweder ins Meer zurückgeführt oder in einem weiteren Kreislauf durch den Spiralwickel geführt.

Auf dem Weg durch den vom Heißkonzentrat-Abstandshaltegitter 11 definierten Raum verdampft ein Teil des erhitzten Meerwassers in die auf beiden Seiten vorgesehene mikroporöse Membran 12 hinein, wobei der Dampf auf der entgegengesetzten Fläche der Membranen 12 austritt und durch das Destillat-Abstandshaltegitter 17 zur gegenüberliegenden Kondensationsfolie 13 gelängt, wo aufgrund der Kühlung dieser Folie durch das kühle Meerwasser K eine Kondensation stattfindet. Die Kondensation kann teilweise auch schon am Destillat-Abstandshaltegitter 17 erfolgen, sofern dieses über die Kondensationsfolie 13 vom ungeheizten Meerwasser K ausreichend abgekühlt ist. Das ungeheizte Meerwasser K erwärmt sich entlang seines Weges von außen nach innen stetig. Umgekehrt kühlt sich das heiße Meerwasser W auf seinem Weg von innen nach außen allmählich ab.

Das Destillat D sammelt sich in dem durch das Destillat-Abstandshaltegitter 17 gebildeten Raum und strömt dann entgegen dem Uhrzeigersinn im Sinne der Pfeile D in Fig. 1 im Spiralwickel allmählich von innen nach außen, wo es dann an den radial äußersten Lagen abgezogen werden kann.

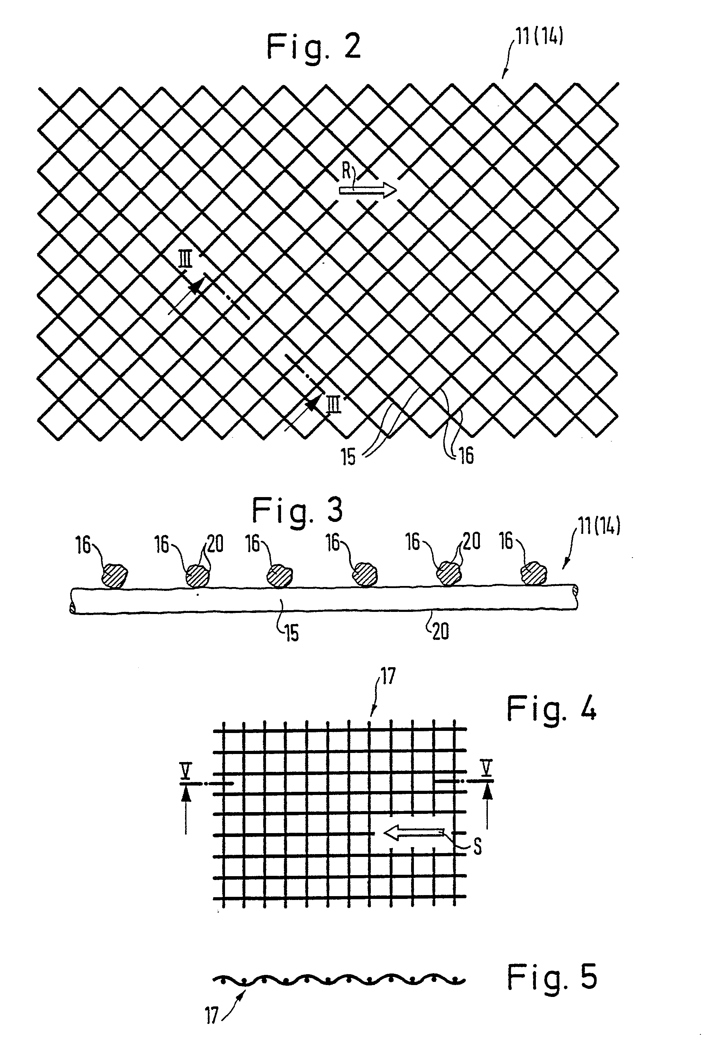

In Fig. 2 ist die Strömungsrichtung des ungeheizten Meerwassers K bzw. des geheizten Meerwassers W mit R bezeichnet. Ersichtlich sind die Stege 15, 16 der beiden Abstandshaltegitter 11 bzw. 14 unter einem Winkel von 45° zur Strömungsrichtung R angeordnet, während gemäß Fig. 3 die Stege 16 auf den unter 90° dazu verlaufenden Stegen 15 angeordnet sind, d.h., daß die Stege 16 und die Stege 15 in zwei verschiedenen Ebenen verlaufen.

Weiterhin ist vorgesehen, daß die Außenformen der Stege 15, 16 in Fig. 3 angedeutete Unregelmäßigkeiten d.h. Oberflächeneinschnürungen oder -erhebungen 20 aufweisen.

Aufgrund dieser Ausbildung ist das in Richtung R einströmende Wasser gezwungen, gewundene Wege durch die Abstandshaltegitter 11 bzw. 14 zu nehmen, so daß quer über die durch die Abstandshaltegitter definierten Räume bzw. Kanäle ein weitgehend vollständiger Temperaturausgleich mit der Folge stattfindet, daß die an einer bestimmten Stelle vorhandene Wärme bzw. Temperatur an den Grenzflächen zu den benachbarten Schichten voll zur Verfügung steht. Der Verwirbelungseffekt wird durch die Unregelmäßigkeiten 20 der Oberflächen der Stege 15, 16 weiter gefördert.

Nach den Fig. 4 und 5 ist das Destillat-Abstandshaltegitter 17 als ein Gewebe ausgebildet, dessen Kett- und Schußfäden sich in bzw. senkrecht zur Strömungsrichtung S des Destillats D erstrecken. Über die gesamte Axialerstreckung des Spiralwickels sind somit in Umfangsrichtung Durchlässe für das Destillat D vorgesehen, so daß es zu einem gleichmäßigen Abströmen des Destillats D über die gesamte axiale Länge des Spiralwickels kommt. Auch hierdurch wird der Destillationswirkungsgrad wesentlich erhöht.

Die Kondensationsfolien 13 sind vorzugsweise als FEP-Folien (Hostaflon-ET) ausgebildet und weisen eine Dicke von 150 μ auf.

Die Abstandshaltegitter 11, 14 bestehen zweckmäßigerweise aus Polypropylen oder Polyethylen hoher Dichte. Aus dem gleichen Material kann auch das Destillations-Abstandshaltegitter 17 bestehen, welches jedoch nur etwa 1/10 so dünn wie die Abstandshaltegitter 11, 14 ausgebildet ist.

Die Kondensationsfolien 13 können vorteilhafterweise aus kaltgewalztem rostfreiem Bandstahl einer Dicke von 0,2 mm bestehen.

## Ansprüche

1. Salzwasserdestillationsvorrichtung mit einem an den beiden Stirnflächen abgedichteten Spiralwickel, der in radialer Richtung sich wiederholend folgende Schichten aufweist: zwei auf den beiden Flächen eines Heißkonzentrat-Abstandshaltegitters (11) angeordnete mikroporöse Membranen (12), auf deren von dem Heißkonzentrat-Abstandshaltegitter (11) abgewandten Seiten Kondensationsfolien (13) angeordnet sind, an die sich Kühlflüssigkeits-Abstandshaltegitter (14) und jeweils eine weitere Kondensationsfolie (13) anschließen, worauf auf beiden Seiten wieder eine mikroröse Membran (12) folgt, usw., wobei zwischen den durch das Kühlflüssigkeits-Abstandshaltegitter (14) auf Abstand gehaltenen Kondensationsfolien (13) das kalte Konzentrat (K) von außen nach innen geleitet wird, von dort in eine Heizvorrichtung gelangt und von dieser zwischen den benachbarten Heißkonzentrat-Abstandshaltegittern (11) das erhitzte Konzentrat (W) im Gegenstrom von innen nach außen geleitet und das Destillat (D) außen abgezogen wird,
dadurch gekennzeichnet,
daß die Abstandshaltegitter (11, 14) aus unter einem Winkel zur Strömungsrichtung (R) angeordneten, gekreuzten Stegen (15, 16) bestehen.

2. Vorrichtung nach Anspruch 1, dadurch gekennzeichnet, daß der Winkel 30-60 und insbesondere etwa 45° beträgt.

3. Vorrichtung nach Anspruch 1 oder 2, dadurch gekennzeichnet, daß die gekreuzten Stege (15, 16) einen Winkel von 90° miteinander einschließen.

4. Vorrichtung nach einem der vorhergehenden Ansprüche, dadurch gekennzeichnet, daß die gekreuzten Stege (15,16) aufeinanderliegen.

5. Vorrichtung nach einem der vorhergehenden Ansprüche, dadurch gekennzeichnet, daß die Stege (15,16) eine Dicke von 1 bis 3, insbesondere etwa 2 mm aufweisen.

6. Vorrichtung nach einem der vorhergehenden Ansprüche, dadurch gekennzeichnet, daß zwischen der vom Heißkonzentrat-Abstandshaltegitter (11) abgewandten Seite der Membran (12) und der anschließenden Kondensationsfolie (13) ein Destillat-Abstandshaltegitter (17) angeordnet ist.

7. Vorrichtung nach Anspruch 6, dadurch gekennzeichnet, daß das Destillat-Abstandshaltegitter (17) ein Gewebe ist.

8. Vorrichtung nach Anspruch 6 oder 7, dadurch gekennzeichnet, daß die Dicke des Destillat-Abstandshaltegitters (17) 0,1 bis 0,3, insbesondere etwa 0,2 mm beträgt.

9. Vorrichtung nach einem der Ansprüche 6 bis 8, dadurch gekennzeichnet, daß die Dicke des Destillat-Abstandshaltegitters 1/20 bis 1/5 und insbesondere etwa 1/10 der Dicke der Abstandshaltegitter (11, 14) beträgt.

10. Vorrichtung nach einem der Ansprüche 6 bis 9, dadurch gekennzeichnet, daß die dampfdurchlässige Schutzschicht (18) der Membran (12) dem Heißkonzentrat-Abstandshaltegitter (11) zugewandt ist und auf der entgegengesetzten Seite der mikroporösen Membranen (12) zwischen der Membran (12) und dem Destillat-Abstandshaltegitter (17) eine wasserdurchlässige Schutzschicht (19), vorzugsweise in Form eines feinen Gewebes angeordnet ist.

11. Vorrichtung nach einem der vorhergehenden Ansprüche, dadurch gekennzeichnet, daß die Kondensationsfolien aus Kunststoff bestehen.

12. Vorrichtung nach einem der Ansprüche 1 bis 10, dadurch gekennzeichnet, daß die Kondensationsfolien (13) aus kaltgewalztem rostfreiem Bandstahl mit einer Dicke von 0,15 bis 0,25, insbesondere etwa 0,2 mm besteht.

# Fig. 1

## Fig. 2

11(14)

R

III III

15 16

## Fig. 3

11(14)

16 16 20 16 16 16 20 16

15 20

## Fig. 4

17

V V

S

## Fig. 5

17

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 088 315 (W.L. GORE) <br> * Zusammenfassng; Ansprüche 3,4,6,11-14,16; Figuren 2A-3; Seite 8, Zeilen 8-12; Seite 14, Zeile 7 - Seite 15, Zeile 17; Seite 22, Zeile 4 - Seite 26, Zeile 7; Beispiel 2 * | 1-5,11 | B 01 D 61/36 <br> B 01 D 63/10 <br> B 01 D 3/00 <br> C 02 F 1/04 |
| A | | 12 | |
| | --- | | |
| Y | I.E.C. PROCESS DESIGN AND DEVELOPMENT, Band 20, Nr. 1, Januar 1981, Seiten 33-40, American Chemical Society, Washington, US; W.G. LIGHT et al.: "Improvement of thin-channel design for pressure-driven membrane systems" <br> * Zusammenfassung; Seite 33, Spalte 1, Zeile 1 - Seite 34, Spalte 1, Zeile 31; Seite 39, Spalte 1, Zeile 3 - Seite 39, Spalte 2, letzte Zeile; Figur 1; Tabelle I * | 1-5,11 | |
| | --- | | |
| A | EP-A-0 096 340 (GFT INGENIEURBÜRO) <br> * Zusammenfassung; Figuren 1-4; Ansprüche 1,3,6; Seite 3, Zeilen 35-38; Seite 5, Zeilen 15-23; Seite 6, Zeilen 20-37 * | 1-5 | RECHERCHIERTE SACHGEBIETE (Int. Cl.5) <br><br> B 01 D <br> C 02 F |
| | --- | | |
| A | EP-A-0 039 197 (GORE) <br> * Zusammenfassung; Figur 7; Ansprüche 1-4; Seite 14, Zeilen 22-36 * | 1,11,12 | |
| | --- | | |
| A | GB-A-2 151 155 (NITTO ELECTRIC IND. CO. LTD) <br> * Zusammenfassung; Figuren 1,2; Ansprüche 1,7,9,10; Seite 2, Zeilen 28-52 * | 6-8,10 | |
| | ---        -/- | | |

Der vorliegende Recherchenbericht wurde für alle Patentansprüche erstellt

| Recherchenort | Abschlußdatum der Recherche | Prüfer |
|---|---|---|
| DEN HAAG | 10-10-1989 | HOORNAERT P.G.R.J. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 9, Nr. 160 (C-289)[1883], 4. Juli 1985; & JP-A-60 34 786 (KURITA KOGYO K.K.) 22-02-1985 * Zusammenfassung * --- | 1,6,7,9 | |
| A | PATENT ABSTRACTS OF JAPAN, Band 10, Nr. 36 (C-328)[2093], 13. Februar 1986; & JP-A-60 187 305 (SASAKURA KIKAI) 24-09-1985 * Zusammenfassung * ----- | 1,6,7, 10 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 10-10-1989 | HOORNAERT P.G.R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)